# FASCICULE DE BREVET EUROPEEN

(11) **EP 0 437 401 B1**
(45) Date de publication et mention de la délivrance du brevet: **02.08.1995**
(21) Numéro de dépôt: 91400042.7
(22) Date de dépôt: 10.01.1991
(51) Int. Cl.: A61C 8/00

(54) **Implant chirurgical pour implantologie orale et maxillo-faciale**
Chirurgisches Implant für Mund- und Kieferimplantationen
Surgical implant for oral and maxillofacial implantations

(30) Priorité: 11.01.1990 FR 9000283
(43) Date de publication de la demande: 17.07.1991
(73) Titulaire: VITANE, F-62604 Berck sur Mer (FR)
(72) Inventeur: Chanavaz Manuel, 76100 Rouen (FR)
(74) Mandataire: Martin, Jean-Paul

(56) Documents cités:
- EP-A- 0 000 549
- EP-A- 0 170 818
- EP-A- 0 343 135
- DE-A- 2 628 443
- FR-A- 2 571 607
- US-A- 4 713 004
- US-A- 4 826 434

## Description

La présente invention a pour objet un implant chirurgical pour implantation maxillo-faciale ostéointégrée c'est-à-dire dentaire, orbito-oculaire, nasale, auriculaire etc, du type défini au préambule de la revendication 1.

On connaît diverses réalisations d'implants oraux, qui comprennent généralement un corps tubulaire constitué d'une tête lisse et d'une tige cylindrique ou cylindro-conique destinée à être vissée ou insérée par compaction dans un volume osseux préalablement foré par un taraud.

Ces implants, habituellement réalisés en titane, reçoivent ensuite un élément appelé "post-implantaire" qui constitue un pilier ou moignon servant de support à une suprastructure prothétique, par exemple une dent. La tige n'est pas filetée sur toute sa longueur et se termine par une extrémité rétrécie lisse, par exemple bombée (EP-A-0170818) ou conique pour faciliter la pénétration de l'implant dans la masse osseuse. Or, une extrémité conique de l'implant est traumatique, ce qui réduit l'étendue de l'utilisation de ces implants. En effet dans certaines zones sensibles en chirurgie maxillo-faciale, la présence de cette "arête vive" pourrait provoquer des dommages sérieux comme le sectionnement d'un nerf ou la perforation de la muqueuse sinusale, de sorte que ces implants ont un champ d'utilisation limité.

En outre, après les quelques années consécutives à l'implantation, on constate généralement une déhiscence ou un tassement de l'os sur une partie de la longueur de l'implant et tout autour de celui-ci. Par ailleurs, la compression de l'os environnant l'implant provoque une diminution du pH de la masse osseuse, et cette augmentation d'acidité entraîne à son tour une baisse de la teneur de l'os en calcium, qui fragilise ce dernier.

Enfin la partie terminale conique des implants connus limite la compression de l'os à cet endroit, donc s'oppose à une baisse locale du pH de l'os, mais en contrepartie diminue la solidité de la liaison et de l'accrochage de l'implant dans le plateau osseux. C'est la raison pour laquelle on ménage à l'extrémité de l'implant une perforation transversale, qui permet une irrigation sanguine directement de part et d'autre de l'implant et donc une transvascularisation supplémentaire par le pont ainsi réalisé. Mais cette perforation transversale proche de l'extrémité du corps de l'implant ne permet pas de limiter la compression de l'os sur la plus grande partie du corps de l'implant, et donc l'augmentation d'acidité et la baisse consécutive de la teneur en l'os en calcium.

La présente invention a donc pour but de proposer un implant ne présentant pas ces divers inconvénients.

Suivant l'invention, l'implant est conforme à la partie caractérisante de la revendication 1. Le fait de prolonger le filetage jusqu'à l'extrémité apicale, assure une liaison plus intime de l'implant avec le puits osseux ou "l'alvéole" osseux. Les débris médullaires de l'os produits lors des manoeuvres de forage et taraudage, se logent passivement (non comprimés) dans les espaces filetés et échancrés et jouent un rôle d'ostéoconduction non négligeable, ce qui permet l'obtention d'une immobilisation plus complète de l'implant.

Par ailleurs, les rainures ou goujures longitudinales extérieures prévues selon la revendication 1 constituent de véritables logettes cicatricielles pour abriter les débris osseux non expulsés par le taraudage du puits osseux et le vissage de l'implant, rendant ainsi possible une ossification qui assure une liaison plus intime et une complète intégration de l'implant avec l'os médullaire.

L'agencement du trou transversal diamétral présente également des avantages spécifiques décrits ci-après.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en élévation longitudinale à échelle agrandie d'une forme de réalisation de l'implant oral selon l'invention.

La figure 2 est une demi-vue de dessus de l'implant de la Figure 1.

La figure 3 est une demi-coupe transversale suivant 3-3 de la figure 1.

La figure 4 est une vue en élévation à échelle agrandie de l'implant de la Fig.1 intégré dans un volume osseux maxillaire, coiffé par un pilier de support d'une dent artificielle.

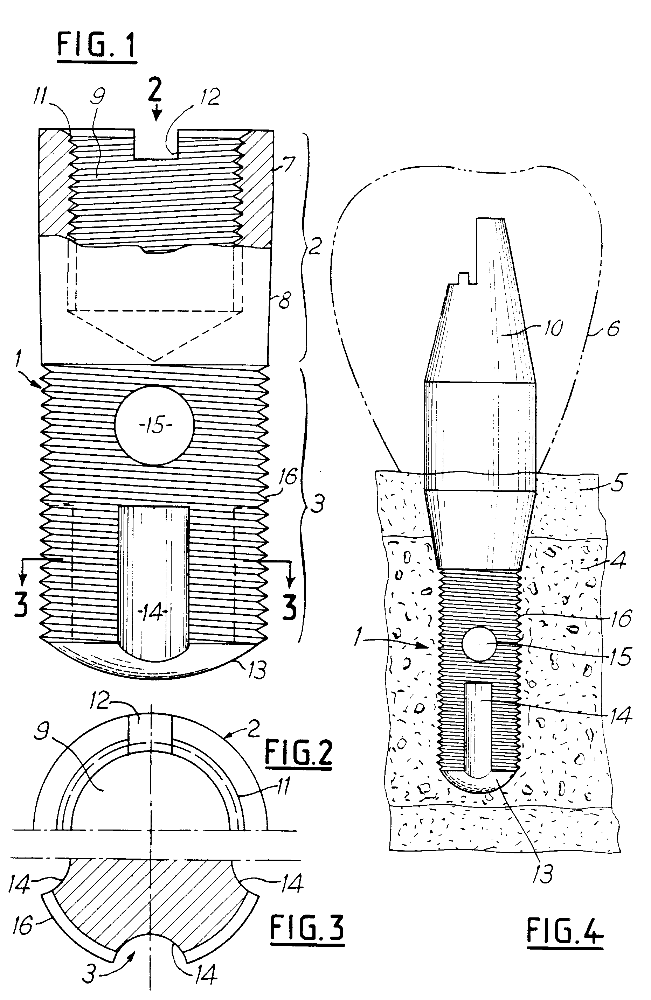

L'implant chirurgical oral représenté aux Fig.1 et 2 est destiné à une implantologie ostéointégrée maxillo-faciale ; dentaire, orbito-oculaire, nasale et auriculaire. En d'autres termes, cet implant peut être utilisé pour les sinus maxillaires, les fosses nasales et les régions ptérygoïdiennes.

Cet implant comprend un corps 1 constitué d'une tête (collet) lisse 2 destinée à se situer dans la région mucopériostée (parodontale), et d'une tige filetée 3 destinée à être vissée dans un puits osseux, pour être coiffé d'une superstructure prothétique.

Dans l'application dentaire représentée à la Fig.2, le corps 1 est ostéo-intégré à un plateau osseux 4, et coiffé d'une superstructure formée par un pilier ou "post-implantaire" sur lequel est fixée une dent artificielle 6.

La tête 2 comporte une première zone terminale cylindrique 7, coronaire ou permuqueuse (parodontale) ou percutanée, en fonction de l'utilisation prévue, suivie d'une seconde zone conique 8. La zone 7 est dite "coronaire" par assimilation à la forme naturelle d'une dent qui comporte une extrémité correspondant à la couronne dentaire, tandis que l'autre extrémité, toujours par la même assimilation, rappelle l'extrémité apicale de la racine. Ces zones sont lisses, la partie cylindrique 7 ayant une longueur par exemple de 1mm. Un trou taraudé 9 est formé dans la tête 2, avec éventuellement un chanfrein ou lamage 11, et deux rainures 12, non débouchantes à l'extérieur, diamétralement opposées sont agencées dans la zone cylindrique 7. Ces rainures 12 peuvent avoir à titre d'exemple numérique indicatif, une largeur de 1mm et une profondeur de 0,5mm.

Au-delà de la partie conique 2, le corps 1 est constitué par une tige 3 munie d'un filetage 16 sur la totalité de sa longueur et dont l'extrémité, opposée à la tête 2, est prolongée par une partie terminale bombée 13, par exemple semi-sphérique.

Au moins deux rainures longitudinales extérieures 14 diamétralement opposées, et par exemple six, séparées par des intervalles angulaires égaux (Fig. 3), sont formées sur la tige filetée 3 à partir de la base de sa calotte bombée 13 et sur une partie de la longueur de la tige 3, par exemple la moitié de cette longueur. Enfin, sensiblement à mi-longueur, ou plus bas vers les rainures 14, le corps 1 est percé d'un ou plusieurs trous transversaux diamétraux 15. Le filetage 16 s'étendant sur la plus grande partie de la longueur du corps 1, le trou 15 traverse la tige filetée 3.

La mise en oeuvre et les avantages techniques de l'implant qui vient d'être décrit sont les suivants.

Le puits osseux est constitué à l'aide d'une série d'instruments adaptée à l'implantologie orale ostéo-intégrée, après quoi le chirurgien met en place l'implant choisi. Cette mise en place se fait par perforation, taraudage et vissage du corps 1 dans le puits osseux à l'aide d'un outil dit "de transfert d'implant". Plus précisément et compte tenu du diamètre de la tige filetée 3 légèrement supérieur au diamètre du puits osseux, par exemple de 0,1mm, le vissage constitue un véritable taraudage qui entraîne le contact étroit de l'os avec l'implant, et l'apport de nouveaux débris osseux non détruits, dû au taraudage. Ces débris peuvent s'ajouter à ceux existants qui proviennent des phases antérieures d'élaboration du puits osseux, et viennent se loger dans les rainures 14 ainsi que dans le trou 15 comme déjà indiqué. En permettant l'ossification et une liaison plus intime de l'os et de l'implant, ils sont les initiateurs de l'os nouveau.

On évite ainsi dans un premier temps une compression latérale ou radiale, et dans un second temps une compression longitudinale de l'os, lorsque l'implant est dans sa position définitive, grâce à l'extrémité bombée 13. Les conditions de non compression de l'os périphérique ne sont donc satisfaites à l'issue de la mise en place de l'implant.

L'extrémité bombée 13 de l'implant remplit deux fonctions : d'une part elle facilite le passage par glissement des débris osseux du fond du puits osseux vers les rainures droites 14 et par conséquent l'ossification ultérieure dans celles-ci ainsi que dans le trou transversal 15, par néo-vascularisation; d'autre part elle évite tout dommage traumatique ou une éventuelle fracture des tables osseuses dans les régions très sensibles (fosses nasales, cavité sinusale, régions en contact avec un nerf) en soulevant la membrane de recouvrement de cette région au lieu de sectionner éventuellement un nerf par une arête vive, ou perforer irréversiblement une membrane sinusale.

Compte tenu de l'existence des débris osseux au fond du puits, sur les parties latérales de l'implant et dans le trou transversal 15, les mécanismes de stimulation osseuse peuvent donc débuter et engendrer une néo-vascularisation.

Une autre fonction importante des rainures longitudinales 14 réside dans le fait qu'elles limitent la compression de l'os, donc sa baisse de pH et par conséquent sa déminéralisation et la fragilisation consécutive de l'os.

Le trou transversal 15 (ou les trous 15) a une double fonction:
a) d'une part il permet l'irrigation sanguine, c'est-à-dire la transvascularisation du corps 1 sans passer par sa circonférence. Il contribue donc localement au maintien de l'équilibre physiologique du pH sanguin. Il s'oppose ainsi à l'augmentation correspondante d'acidité de l'os dans cette zone, donc à sa fragilisation. Ainsi le passage sanguin dans le trou 15 rétablit la normalité du pH et de la teneur de l'os en calcium. Cette transvascularisation favorise également la genèse d'un "cortical" osseux à travers le trou, qui contribue au blocage (ou clavetage naturel) de l'implant en rotation dans le puits osseux.
b) d'autre part il limite la progression de la déhiscence ou résorption de l'os à partir de la tête 2, constatée sur tous les implants connus au bout d'une période de l'ordre de 5 à 7 ans, par le maintien d'une zone osseuse protégée dans le trou 15.

La perforation centro-médullaire constituée par le (ou les) trou(s) 15 est donc un élément de lutte contre la destruction osseuse autour de l'implant, ainsi qu'un élément de son renforcement biomécanique.

La tête lisse 2 formant la partie supérieure de l'implant, (partie permuqueuse) se situe, une fois l'implant mis en place, en région mi-osseuse et mi-muqueuse (plateau osseux 4 et muqueuse 5, Fig.2). La configuration cylindro-conique de la tête 2 évite une compression dommageable de l'os cortical au moment de l'ostéotomie, ainsi qu'une pénétration complète de la tête 2 dans l'os. Le cône 8 permet d'autre part une bonne adaptation aux tissus mous (collet "parodontal" implantaire) et d'autre part un ralentissement de la résorption du plateau osseux. En effet, en l'absence de la partie conique 2, la zone lisse cylindrique 7 peut entraîner une résorption de la masse osseuse en contact avec la partie permuqueuse de l'implant. Cette zone lisse permet également le maintien d'une bonne hygiène parodontale.

Une fois l'implant mis en place et intégré dans le plateau osseux, il est possible d'y fixer par vissage dans le trou taraudé 9, le moignon 10 ou post-implantaire, qui va constituer le pivot d'une superstructure prothétique telle que la dent 6.

De façon connue en soi, l'implant peut être réalisé en titane pur ou en alliage de titane. Diverses variantes peuvent être apportées au mode de réalisation décrit : par exemple l'extrémité bombée 13 peut être plus ou moins accentuée. Les rainures 12 peuvent être supprimées, afin de permettre l'adaptation des post-implantaires préexistant dans le commerce. Ainsi les rainures 12 peuvent être remplacées par tout type d'empreinte permettant le vissage de l'implant (hexagonale, étoilée, etc...). La conception de l'implant selon l'invention permet de réduire son diamètre par rapport aux implants connus, ce qui est avantageux pour les régions où le volume osseux présente une faible épaisseur.

## Revendications

1. Implant chirurgical pour implantation maxillo-faciale ostéo-intégrée, comprenant un corps (1) constitué d'une tête lisse (2) et d'une tige cylindrique (3) destinée à être vissée dans un puits osseux, cette tige cylindrique (3) étant filetée sur la totalité de sa longueur, son extrémité opposée à la tête lisse (2) étant prolongée par une partie terminale bombée (13), caractérisé en ce qu'au moins deux rainures longitudinales (14) sont formées extérieurement sur la tige filetée (3), ces rainures s'étendant dans la demi-longueur apicale de ladite tige filetée (3), et en ce que le corps (1) est percé d'au moins un trou transversal diamétral (15) situé sensiblement à mi-longueur dudit corps ou décalé vers les rainures longitudinales (14).

2. Implant selon la revendication 1, caractérisé en ce que l'extrémité de la tige filetée (3) opposée à la tête lisse (2) est semi-sphérique.

3. Implant selon l'une des revendications 1 et 2, caractérisé en ce que la tête (2) du corps (1) comporte une première zone terminale cylindrique (7), coronaire ou permuqueuse, ou percutanée, et une seconde zone conique (8), reliée à la tige filetée (3).

4. Implant selon l'une des revendications 1 à 3, caractérisé en ce que les rainures (14) s'étendent sur une partie de la longueur de la tige filetée (3).

## Claims

1. Surgical implant for osteo-integrated maxillo-facial implantation, comprising a member (1) consisting of a smooth head (2) and a cylindrical rod (3) adapted to be screwed into a bone recess, said cylindrical rod (3) being screw-threaded over its entire length, its end opposite the smooth head (2) being extended by a rounded terminal portion (13), characterised in that at least two longitudinal grooves (14) are formed externally on the threaded rod (3), these grooves extending halfway along the apical length of said threaded rod (3), and in that the member (1) is pierced with at least one diametral transverse hole (15) located substantially halfway along said member or offset towards the longitudinal grooves (14).

2. Implant according to claim 1, characterised in that the end of the threaded rod (3) opposite the smooth head (2) is hemispherical.

3. Implant according to one of claims 1 and 2, characterised in that the head (2) of the member (1) has a first cylindrical end zone (7) which is coronary or permucosal or percutaneous, and a second conical zone (8) connected to the threaded rod (3).

4. Implant according to one of claims 1 to 3, characterised in that the grooves (14) extend over part of the length of the threaded rod (3).

## Patentansprüche

1. Chirurgisches Implantat für knochenintegrierte Kieferimplantationen, mit einem Körper (1), der gebildet wird durch einen glatten Kopf (2) und einen zylindrischen Schaft (3), der dazu bestimmt ist, in eine Bohrung des Knochens eingeschraubt zu werden, wobei dieser zylindrische Schaft (3) auf seiner gesamten Länge mit Gewinde versehen ist und sein dem glatten Kopf (2) entgegengesetztes Ende durch einen bombierten Endbereich (13) verlängert ist, dadurch gekennzeichnet. daß wenigstens zwei Längsnuten (14) außen an dem Gewindeschaft (3) ausgebildet sind, diese Nuten sich in der dem freien Ende zugewandten Hälfte der Länge des Gewindeschaftes (3) erstrecken, und daß der Körper (1) von wenigstens einer diametralen Querbohrung (15) durchsetzt ist, die sich im wesentlichen auf halber Höhe des Körpers oder zu den Längsnuten (14) versetzt befindet.

2. Implantat nach Anspruch 1, dadurch gekennzeichnet, daß das dem glatten Kopf (2) entgegengesetzte Ende des Gewindeschaftes (3) halbkugelig ist.

3. Implantat nach Anspruch 1 oder 2, dadurch gekennzeichnet, daß der Kopf (2) des Körpers (1) eine zylindrische, kronenförmige oder die Schleimhaut durchdringende oder die Haut durchdringende endständige erste Zone (7) und eine konische zweite Zone (8) aufweist, die mit dem Gewindeschaft (3) verbunden ist,

4. Implantat nach einem der Ansprüche 1 bis 3, dadurch gekennzeichnet, daß die Nuten (14) sich auf einen Teil der Länge des Gewindeschaftes (3) erstrecken.
